# EUROPÄISCHE PATENTSCHRIFT

(11) **EP 3 869 176 B1**
(45) Veröffentlichungstag und Bekanntmachung des Hinweises auf die Patenterteilung: **09.07.2025**
(21) Anmeldenummer: 20158686.4
(22) Anmeldetag: 21.02.2020
(51) Int. Cl.: G01M 17/02, G01B 11/24, G01N 21/952

(54) **VERFAHREN ZUM PRÜFEN VON REIFEN**
METHOD FOR INSPECTING TYRES
PROCÉDÉ D'INSPECTION DE PNEUS

(43) Veröffentlichungstag der Anmeldung: 25.08.2021
(73) Patentinhaber: Continental Reifen Deutschland GmbH, 30175 Hannover (DE)
(72) Erfinder: Silva, Ana Eduarda, 30419 Hannover (DE); Moreira, Eduardo João, 30419 Hannover (DE); Sliwa, Fabien, 30419 Hannover (DE)
(74) Vertreter: Continental Corporation

(56) Entgegenhaltungen:
- EP-A1- 4 065 949
- WO-A1-2016/103103
- WO-A1-2019/030061
- WO-A2-01/84126

## Beschreibung

Die Erfindung betrifft ein Verfahren zum Prüfen von Reifen, mit den Schritten: Beleuchten eines Oberflächenbereichs eines zu prüfenden Reifens mittels einer Beleuchtungseinrichtung, Erzeugen von mehreren zweidimensionalen Bildaufnahmen des beleuchteten Oberflächenbereichs mittels zumindest einer Bildaufnahmeeinrichtung und Auswerten der mehreren zweidimensionalen Bildaufnahmen mittels einer Auswerteeinrichtung zur Erfassung von Defekten, Fehlern und/oder Beschädigungen an der Oberfläche des Reifens.

Ferner betrifft die Erfindung eine Reifenprüfeinrichtung mit einer Beleuchtungseinrichtung, zumindest einer Bildaufnahmeeinrichtung, einer Auswerteeinrichtung und einer Steuerungseinrichtung. Die Beleuchtungseinrichtung ist dazu eingerichtet, einen Oberflächenbereich eines zu prüfenden Reifens zu beleuchten und dabei unterschiedliche Beleuchtungszustände zu erzeugen. Die zumindest eine Bildaufnahmeeinrichtung ist dazu eingerichtet, mehrere zweidimensionale Bildaufnahmen des beleuchteten Oberflächenbereichs zu erzeugen. Die Auswerteeinrichtung ist dazu eingerichtet, die mehreren zweidimensionalen Bildaufnahmen zur Erfassung von Defekten, Fehlern und/oder Beschädigungen an der Oberfläche des Reifens auszuwerten. Die Steuerungseinrichtung dient zum Steuern der Beleuchtungseinrichtung und der zumindest einen Bildaufnahmeeinrichtung.

Zum Prüfen von Reifen auf Defekte, Fehler und/oder Beschädigungen sind im Stand der Technik unterschiedliche Ansätze bekannt. Die Druckschriften US 2010/0002244 A1, US 2018/0266810 A1, US 2018/0299353 A1, WO 2017/11529 A1 und WO 2018/015908 A1 schlagen unterschiedliche Vorrichtungen und Verfahren zum Prüfen von Reifen vor. Das Dokument WO2016/103103 offenbart ein Verfahren zum Prüfen von Reifen gemäß dem Stand der Technik.

Defekte, Fehler und/oder Beschädigungen in der Reifenoberfläche, welche eine Tiefenkomponente aufweisen, können durch eine geeignete Beleuchtung hervorgehoben werden, sodass Unregelmäßigkeiten in der Reifenoberfläche auf Grundlage von entsprechenden Bildaufnahmen mit einer erhöhten Zuverlässigkeit erkannt werden können. Insbesondere eine Beleuchtung mit einem schrägen Lichteinfallswinkel in Bezug auf die zu prüfende Reifenoberfläche ermöglicht eine bildbasierte Detektion von defekten, fehlerhaften oder beschädigten Oberflächenbereichen.

Die in diesem Zusammenhang bisher durchgeführten Analysen von zweidimensionalen Bildaufnahmen der Reifenoberfläche führen jedoch zu unbefriedigenden Fehlerdetektionsraten. Die Praxis hat gezeigt, dass weiterhin eine vergleichsweise große Anzahl von Oberflächenfehlern und -beschädigungen durch die Analyse von zweidimensionalen Bildaufnahmen bei der maschinengestützten Reifenprüfung nicht erfasst wird.

Die der Erfindung zugrundeliegende Aufgabe besteht somit in der Steigerung der Fehlerdetektionsrate bei der maschinengestützten Prüfung von Reifen auf Oberflächenbeschädigungen.

Die Aufgabe wird gelöst durch ein Verfahren gemäß Anspruch 1.

Im Rahmen der vorliegenden Erfindung können, falls nicht anders angegeben, dreidimensionale Profilinformationen Informationen über die Oberfläche eines beliebigen Gummiartikels, insbesondere jedoch eines Laufstreifens eines Fahrzeugreifens, betreffen. Die Erfindung macht sich die Erkenntnis zunutze, dass mehrere zweidimensionale Bildaufnahmen, welche bei unterschiedlichen Beleuchtungszuständen erzeugt wurden, zum Ableiten von dreidimensionalen Profilinformationen der Oberfläche des Reifens geeignet sind. Es erfolgt also im Rahmen des erfindungsgemäßen Verfahrens keine Einzelanalyse der zweidimensionalen Bildaufnahmen, sondern eine Erfassung von Defekten, Fehlern und/oder Beschädigungen an der Oberfläche des Reifens auf Grundlage von ermittelten dreidimensionalen Profilinformationen der Reifenoberfläche.

Die Erfassungspräzision sowie die Fehlerdetektionsrate können auf diese Weise erheblich gesteigert werden. Bereits geringfügige Oberflächenfehler und kleinste Beschädigungen an der Reifenoberfläche können mit dem erfindungsgemäßen Verfahren erfasst werden.

Die Bildaufnahmeeinrichtung ist vorzugsweise eine Kamera, wobei die Beleuchtungseinrichtung, die Bildaufnahmeeinrichtung und/oder die Auswerteeinrichtung Bestandteile einer Reifenprüfeinrichtung sein können. Die unterschiedlichen Beleuchtungszustände werden durch eine entsprechende Ansteuerung der Beleuchtungseinrichtung eingestellt. Die Beleuchtungseinrichtung kann hierzu mehrere Lichtquellen aufweisen, welche an unterschiedliche Positionen in Bezug auf den zu prüfenden Oberflächenbereich des Reifens angeordnet sein können und/oder unterschiedliche Ausrichtungen aufweisen können. Einzelne oder mehrere Lichtquellen können zum Einstellen unterschiedlicher Beleuchtungszustände auch wahlweise aktiviert oder deaktiviert werden.

Im Rahmen des erfindungsgemäßen Verfahrens kann die innenliegende und/oder die außenliegende Oberfläche des Reifens geprüft, also mittels der Beleuchtungseinrichtung beleuchtet und mittels der zumindest einen Bildaufnahmeeinrichtung aufgenommen werden. Die Auswerteeinrichtung umfasst vorzugsweise eine Datenverarbeitungseinrichtung und kann als Auswertecomputer ausgebildet sein. Mittels der Beleuchtungseinrichtung können zumindest zwei, vorzugsweise zumindest drei, Beleuchtungszustände eingestellt werden. Der Reifen ist vorzugsweise ein Fahrzeugluftreifen.

In einer bevorzugten Ausführungsform des erfindungsgemäßen Verfahrens erfolgt das Beleuchten eines Oberflächenbereichs des zu prüfenden Reifens und/oder das Erzeugen von mehreren zweidimensionalen Bildaufnahmen mehrfach während einer Rotationsbewegung des Reifens. Vorzugsweise wird die Rotationsbewegung des Reifens über eine Rotationseinrichtung der Reifenprüfeinrichtung realisiert. Die Beleuchtungseinrichtung und/oder die zumindest eine Bildaufnahmeeinrichtung sind vorzugsweise stationär und führen keine Rotationsbewegung aus. Der beleuchtete und aufgenommene Oberflächenbereich verändert sich somit aufgrund der Rotationsbewegung des Reifens, sodass mehrere Bildaufnahmen erzeugt werden, welche insgesamt einen umlaufenden Oberflächenabschnitt des Reifens abbilden. Vorzugsweise erfolgt die Bildaufnahme mittels mehrerer Bildaufnahmeeinrichtungen, damit ein Tiefenprofil der gesamten innenliegenden und/oder außenliegenden Oberfläche des Reifens ermittelt werden kann.

In einer anderen Ausführungsform des erfindungsgemäßen Verfahrens werden die Beleuchtungseinrichtung und die Bildaufnahmeeinrichtung derart von einer Steuerungseinrichtung gesteuert, dass während einer Umdrehung des Reifens zweidimensionale Bildaufnahmen bei zumindest drei unterschiedlichen Beleuchtungszuständen erzeugt werden, welche zusammen zumindest einen Oberflächenabschnitt des Reifens über den gesamten Reifenumfang bei den zumindest drei unterschiedlichen Beleuchtungszuständen abbilden. Die Steuerungseinrichtung ist vorzugsweise Bestandteil der Reifenprüfeinrichtung. Vorzugsweise werden Bildaufnahmen von mehreren Bildaufnahmeeinrichtungen erzeugt, sodass während einer Umdrehung des Reifens zweidimensionale Bildaufnahmen bei zumindest drei unterschiedlichen Beleuchtungszuständen erzeugt werden, welche zusammen die gesamte innenliegende und/oder außenliegende Oberfläche bei den zumindest drei unterschiedlichen Beleuchtungszuständen abbilden. In diesem Fall ist lediglich eine Umdrehung des Reifens erforderlich, um dreidimensionale Profilinformationen der gesamten innenliegenden und/oder außenliegenden Oberfläche des Reifens zu ermitteln. Die Identifikation von Oberflächenfehlern und/oder -beschädigungen erfolgt somit nicht nur zuverlässig, sondern auch äußerst schnell.

Das erfindungsgemäße Verfahren wird außerdem dadurch vorteilhaft weitergebildet, dass das Ermitteln von dreidimensionalen Profilinformationen der Oberfläche des Reifens im Rahmen einer schattenbasierten Rekonstruktion der Oberfläche des Reifens auf Grundlage von mehreren bei unterschiedlichen Beleuchtungszuständen erzeugten zweidimensionalen Bildaufnahmen erfolgt. Die schattenbasierte Rekonstruktion nutzt die unterschiedlichen Schattenwürfe während der unterschiedlichen Beleuchtungszustände, welche beispielsweise auf unterschiedliche Lichteinfallswinkel zurückzuführen sind. Vorzugsweise wird die Reflexionscharakteristik der Reifenoberfläche zum Rekonstruieren von Oberflächenorientierungen und/oder Profilhöhenwerten im Rahmen der schattenbasierten Rekonstruktion der Oberfläche ausgewertet.

Es ist außerdem ein erfindungsgemäßes Verfahren vorteilhaft, bei welchem beim Auswerten der mehreren zweidimensionalen Bildaufnahmen eine photometrische Stereoanalyse auf Grundlage der bei unterschiedlichen Beleuchtungszuständen erzeugten zweidimensionalen Bildaufnahmen durch die Auswerteeinrichtung durchgeführt wird. Bei der photometrischen Stereoanalyse basiert die Rekonstruktion der Reifenoberfläche auf deren photometrischen Eigenschaften. Die photometrische Stereoanalyse erlaubt die Berechnung einer Höhenkarte für die Reifenoberfläche. Die photometrische Stereoanalyse erlaubt ferner die Bestimmung von Krümmungseigenschaften der Reifenoberfläche und/oder die Erfassung der Oberflächenstruktur des Reifens.

In einer Weiterbildung des erfindungsgemäßen Verfahrens wird der beleuchtete Oberflächenbereich in den unterschiedlichen Beleuchtungszuständen aus unterschiedlichen Richtungen von Lichtquellen der Beleuchtungseinrichtung angestrahlt. Es ergeben sich somit in den einzelnen Beleuchtungszuständen unterschiedliche Lichteinfallswinkel auf der Reifenoberfläche. Aufgrund der unterschiedlichen Lichteinfallswinkel ergibt sich in den unterschiedlichen Beleuchtungszuständen ein voneinander abweichender Schattenwurf im Bereich von Oberflächenunebenheiten. Aus den mehreren unterschiedlichen Schattenwürfen können dann Profilinformationen abgeleitet werden. Alternativ oder zusätzlich können in den unterschiedlichen Beleuchtungszuständen auch verschiedene Beleuchtungsintensitäten eingestellt sein.

In einer weiteren bevorzugten Ausführungsform des erfindungsgemäßen Verfahrens wird der beleuchtete Oberflächenbereich in den unterschiedlichen Beleuchtungszuständen von unterschiedlichen Lichtquellen der Beleuchtungseinrichtung angestrahlt. Die Lichtquellen, welche den Oberflächenbereich in den unterschiedlichen Beleuchtungszuständen anstrahlen, können an unterschiedlichen Positionen angeordnet sein und/oder eine unterschiedliche Ausrichtung aufweisen. Die Lichtquellen, welche den Oberflächenbereich in den unterschiedlichen Beleuchtungszuständen anstrahlen, können unterschiedliche Abstrahlwinkel in Bezug auf den Oberflächenbereich aufweisen. Vorzugsweise wird der Oberflächenbereich zum Einstellen eines ersten Beleuchtungszustands von einer ersten Lichtquelle oder einer ersten Gruppe von Lichtquellen angestrahlt. Vorzugsweise wird der Oberflächenbereich zum Einstellen eines zweiten Beleuchtungszustands von einer zweiten Lichtquelle oder einer zweiten Gruppe von Lichtquellen angestrahlt. Vorzugsweise wird der Oberflächenbereich zum Einstellen eines dritten Beleuchtungszustands von einer dritten Lichtquelle oder einer dritten Gruppe von Lichtquellen angestrahlt. Die erste, zweite und dritte Lichtquelle bzw. die erste, zweite und dritte Gruppe von Lichtquellen sind auf unterschiedlichen Seiten oder in unterschiedlichen Richtungen in Bezug auf den zu prüfenden Oberflächenbereich angeordnet und/oder weisen unterschiedliche Ausrichtungen auf. Beim Ändern des Beleuchtungszustands werden vorzugsweise eine oder mehrere Lichtquellen deaktiviert und eine oder mehrere andere Lichtquellen aktiviert.

Die der Erfindung zugrundeliegende Aufgabe wird ferner durch eine Reifenprüfeinrichtung der eingangs genannten Art gelöst, wobei die Steuerungseinrichtung der erfindungsgemäßen Reifenprüfeinrichtung dazu eingerichtet ist, die Beleuchtungseinrichtung und die zumindest eine Bildaufnahmeeinrichtung derart zu steuern, dass die mehreren zweidimensionalen Bildaufnahmen bei unterschiedlichen Beleuchtungszuständen erzeugt werden, wobei die Auswerteeinrichtung dazu eingerichtet ist, auf Grundlage von mehreren bei unterschiedlichen Beleuchtungszuständen erzeugten zweidimensionalen Bildaufnahmen dreidimensionale Profilinformationen der Oberfläche des Reifens zu ermitteln.

Die zumindest eine Bildaufnahmeeinrichtung ist vorzugsweise eine Kamera. Die Auswerteeinrichtung umfasst vorzugsweise eine Datenverarbeitungseinrichtung und kann beispielsweise als Auswertecomputer ausgebildet sein. Die Beleuchtungseinrichtung ist vorzugsweise dazu eingerichtet, zumindest zwei, vorzugsweise zumindest drei, unterschiedliche Beleuchtungszustände einzustellen. Die Auswerteeinrichtung ist dazu eingerichtet, zum Ermitteln der dreidimensionalen Profilinformationen der Reifenoberfläche eine schattenbasierte Rekonstruktion der Oberfläche auf Grundlage der mehreren bei unterschiedlichen Beleuchtungszuständen erzeugten zweidimensionalen Bildaufnahmen durchzuführen. Ferner kann die Auswerteeinrichtung dazu eingerichtet sein, beim Auswerten der mehreren zweidimensionalen Bildaufnahmen eine photometrische Stereoanalyse auf Grundlage von mehreren bei unterschiedlichen Beleuchtungszuständen erzeugten zweidimensionalen Bildaufnahmen durchzuführen.

In einer bevorzugten Ausführungsform weist die erfindungsgemäße Reifenprüfeinrichtung eine Rotationseinrichtung auf, mittels welcher der Reifen rotierbar ist. Die Rotationseinrichtung kann mehrere Kontaktglieder aufweisen, mittels welcher der Reifen verspannt werden kann. Die Kontaktglieder können als rotierend antreibbare Wellen ausgebildet sein, sodass über eine Rotation eines Kontaktglieds oder über die Rotation mehrerer oder sämtlicher Kontaktglieder eine Reifenrotation umgesetzt werden kann. Die Kontaktglieder erstrecken sich während der Reifenprüfung vorzugsweise durch die zentrale Felgenausnehmung des Reifens und stehen in Kontakt mit den umlaufenden Reifenwülsten. Die Steuerungseinrichtung kann dazu eingerichtet sein, ein Beleuchten des Oberflächenbereichs und ein Erzeugen von mehreren zweidimensionalen Bildaufnahmen bei unterschiedlichen Beleuchtungszuständen mehrfach während einer Rotationsbewegung des Reifens zu veranlassen. Die Beleuchtungseinrichtung und die zumindest eine Bildaufnahmeeinrichtung sind vorzugsweise stationär und führen keine Rotationsbewegung aus. Die Beleuchtungseinrichtung umfasst vorzugsweise mehrere Lichtquellen, welche beispielsweise als LEDs, insbesondere als Weißlicht-LEDs, ausgebildet sein können. Die Lichtquellen, welche den Oberflächenbereich bei den unterschiedlichen Beleuchtungszuständen anstrahlen, können an unterschiedlichen Positionen angeordnet sein und/oder eine unterschiedliche Ausrichtung aufweisen. Vorzugsweise weist die Beleuchtungseinrichtung eine erste, eine zweite und eine dritte Lichtquelle oder eine erste, eine zweite und eine dritte Gruppe von Lichtquellen auf. Die erste, zweite und dritte Lichtquelle bzw. die erste, zweite und dritte Gruppe von Lichtquellen sind auf unterschiedlichen Seiten oder in unterschiedlichen Richtungen in Bezug auf den Oberflächenbereich angeordnet und/oder weisen unterschiedliche Ausrichtungen auf. Vorzugsweise wird der Oberflächenbereich zum Einstellen eines ersten Beleuchtungszustands von der ersten Lichtquelle oder der ersten Gruppe von Lichtquellen angestrahlt. Vorzugsweise wird der Oberflächenbereich zum Einstellen eines zweiten Beleuchtungszustands von der zweiten Lichtquelle oder der zweiten Gruppe von Lichtquellen angestrahlt. Vorzugsweise wird der Oberflächenbereich zum Einstellen eines dritten Beleuchtungszustands von der dritten Lichtquelle oder der dritten Gruppe von Lichtquellen angestrahlt. Die Steuerungseinrichtung ist vorzugsweise dazu eingerichtet, beim Ändern des Beleuchtungszustands eine oder mehrere Lichtquellen zu deaktivieren und eine oder mehrere Lichtquellen zu aktivieren.

In einer weiteren bevorzugten Ausführungsform ist die Reifenprüfeinrichtung dazu eingerichtet, das Verfahren zum Prüfen eines Reifens nach einer der vorstehend beschriebenen Ausführungsformen auszuführen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Reifenprüfeinrichtung in einer schematischen Darstellung;
- Fig. 2: einen Lichtquellenträger einer erfindungsgemäßen Reifenprüfeinrichtung in einer Seitenansicht; und
- Fig. 3: einen weiteren Lichtquellenträger einer erfindungsgemäßen Reifenprüfeinrichtung in einer Seitenansicht.

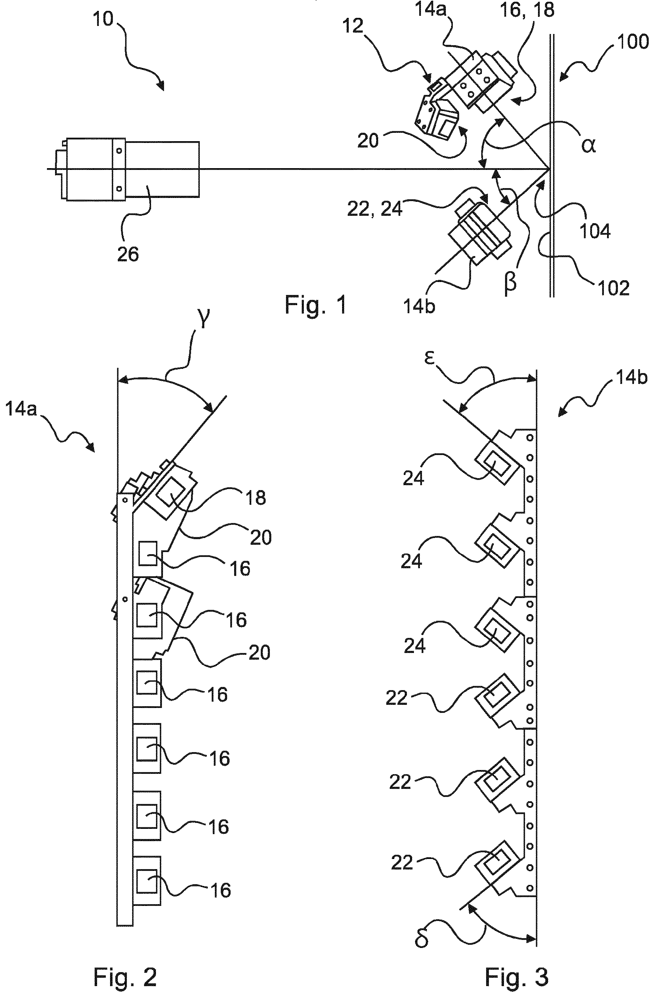

Die Fig. 1 zeigt eine Reifenprüfeinrichtung 10 mit einer Beleuchtungseinrichtung 12 und einer Bildaufnahmeeinrichtung 26. Ferner umfasst die Reifenprüfeinrichtung 10 eine Auswerteeinrichtung, eine Steuerungseinrichtung und eine Rotationseinrichtung.

Die Beleuchtungseinrichtung 12 dient zum Beleuchten eines Oberflächenbereichs 104 eines zu prüfenden Reifens 100 und erlaubt die Einstellung unterschiedlicher Beleuchtungszustände. Hierzu weist die Beleuchtungseinrichtung 12 eine Mehrzahl von Lichtquellen 16, 18, 20, 22, 24 auf, welche als LEDs ausgebildet sind. Die Lichtquellen 16, 18, 20 sind an dem Lichtquellenträger 14a befestigt, wobei der Lichtquellenträger 14a als LED-Trägerschiene ausgebildet ist. Die Lichtquellen 22, 24 sind an dem Lichtquellenträger 14b befestigt, wobei der Lichtquellenträger 14b ebenfalls als LED-Trägerschiene ausgebildet ist.

Die Bildaufnahmeeinrichtung 26 ist eine Kamera, mittels welcher zweidimensionale Bildaufnahmen des beleuchteten Oberflächenbereichs 104 erzeugt werden können.

Der Reifen 100 ist in die nicht dargestellte Rotationseinrichtung eingespannt, mittels welcher der Reifen 100 rotierbar ist. Beispielsweise kann die Rotationseinrichtung mehrere, beispielsweise vier, als Wellen ausgebildete Kontaktglieder aufweisen, welche sich durch die Felgenausnehmung des Reifens 100 erstrecken und in Kontakt mit den Reifenwülsten des Reifens 100 stehen. Durch eine Rotation eines, mehrerer oder sämtlicher Kontaktglieder kann eine Rotationsbewegung des Reifens 100 umgesetzt werden.

Das Beleuchten eines Oberflächenbereichs 104 des Reifens 100 und das Erzeugen von mehreren zweidimensionalen Bildaufnahmen erfolgt mehrfach während der Rotationsbewegung des Reifens 100. Die Beleuchtungseinrichtung 12 und die Bildaufnahmeeinrichtung 26 sind stationär ausgebildet und führen keine Rotationsbewegung aus. Der beleuchtete und aufgenommene Oberflächenbereich 104 verändert sich somit aufgrund der Rotationsbewegung des Reifens 100, sodass mehrere Bildaufnahmen erzeugt werden, welche insgesamt einen umlaufenden Oberflächenabschnitt des Reifens 100 abbilden. Die Beleuchtungseinrichtung 12 und die Bildaufnahmeeinrichtung 26 werden derart von der Steuerungseinrichtung gesteuert, dass während einer Umdrehung des Reifens 100 zweidimensionale Bildaufnahmen bei zumindest drei unterschiedlichen Beleuchtungszuständen erzeugt werden, welche zusammen einen Oberflächenabschnitt des Reifens 100 über den gesamten Reifenumfang bei den drei unterschiedlichen Beleuchtungszuständen abbilden.

Mit mehreren Bildaufnahmeeinrichtungen 26 und einer entsprechend erweiterten Beleuchtungseinrichtung 12 können während einer Umdrehung des Reifens 100 auch zweidimensionale Bildaufnahmen bei drei unterschiedlichen Beleuchtungszuständen erzeugt werden, welche zusammen die gesamte innenliegende und/oder außenliegende Oberfläche des Reifens 100 in den drei unterschiedlichen Beleuchtungszuständen abbilden.

Die Auswerteeinrichtung der Reifenprüfeinrichtung 10 ist dazu eingerichtet, die mehreren zweidimensionalen Bildaufnahmen zur Erfassung von Defekten, Fehlern und Beschädigungen an der Oberfläche 102 des Reifens 100 auszuwerten. Die Auswerteeinrichtung ermittelt hierbei auf Grundlage der mehreren bei unterschiedlichen Beleuchtungszuständen erzeugten zweidimensionalen Bildaufnahmen dreidimensionale Profilinformationen der Oberfläche 102.

Zum Ermitteln der dreidimensionalen Profilinformationen der Oberfläche 102 führt die Auswerteeinrichtung eine schattenbasierte Rekonstruktion der Oberfläche 102 auf Grundlage der mehreren bei unterschiedlichen Beleuchtungszuständen erzeugten zweidimensionalen Bildaufnahmen durch. Konkret erfolgt die Rekonstruktion der Oberfläche 102 des Reifens 100 durch eine fotometrische Stereoanalyse, welcher die mehreren bei unterschiedlichen Beleuchtungszuständen erzeugten zweidimensionalen Bildaufnahmen zugrunde gelegt werden.

In den unterschiedlichen Beleuchtungszuständen wird der Oberflächenbereich 104 aus unterschiedlichen Richtungen von den Lichtquellen 16, 18, 20, 22, 24 der Beleuchtungseinrichtung 12 angestrahlt. Aufgrund der Anstrahlung des Oberflächenbereichs 104 aus unterschiedlichen Richtungen ergeben sich in den einzelnen Beleuchtungszuständen unterschiedliche Lichteinfallswinkel α, β, wodurch sich in den unterschiedlichen Beleuchtungszuständen ein voneinander abweichender Schattenwurf im Bereich von Oberflächenunebenheiten ergibt. Die Lichteinfallswinkel α, β liegen beispielsweise in einem Bereich zwischen 35 bis 45 Grad. Aus den unterschiedlichen Schattenwürfen können dann dreidimensionale Profilinformationen der Oberfläche 102 abgeleitet werden.

Die Fig. 2 und 3 zeigen beispielhaft unterschiedliche Lichtquellenträger 14a, 14b, mittels welchen unterschiedliche Beleuchtungszustände in einem Oberflächenbereich 104 eines Reifens 100 umgesetzt werden können.

An dem Lichtquellenträger 14a ist eine erste Gruppe von Lichtquellen 16, eine zweite Gruppe von Lichtquellen 20 und eine Einzellichtquelle 18 befestigt. Die erste Gruppe von Lichtquellen 16, die zweite Gruppe von Lichtquellen 20 und die Einzellichtquelle 18 unterschieden sich hinsichtlich ihres Anstellwinkels, wobei beispielhaft der Anstellwinkel γ der Einzellichtquelle 18 gekennzeichnet ist. Der Anstellwinkel γ beträgt beispielsweise 40 Grad.

Die Lichtquellen 16, 18, 20 des Lichtquellenträgers 14a können zum Beleuchten unterschiedlicher Oberflächenbereiche eines Reifens 100 eingesetzt werden. Einer dieser Oberflächenbereiche kann auch durch die Lichtquellen 22 oder die Lichtquellen 24, welche an dem in der Fig. 3 dargestellten Lichtquellenträger 14b befestigt sind, angestrahlt werden. Die Lichtquellen 22 weisen einen Anstellwinkel δ von beispielweise 50 Grad auf. Der dargestellte Anstellwinkel ε der Lichtquellen 24 kann beispielsweise ebenfalls 50 Grad betragen, wobei die Lichtquellen 22 schräg nach oben und die Lichtquellen 24 schräg nach unten ausgerichtet sind.

Beim Ändern des Beleuchtungszustands werden einzelne Lichtquellen 16, 18, 20, 22, 24 deaktiviert und einzelne Lichtquellen 16, 18, 20, 22, 24 aktiviert. Somit wird der beleuchtete Oberflächenbereich 14 in den unterschiedlichen Beleuchtungszuständen von unterschiedlichen Lichtquellen 16, 18, 20, 22, 24 angestrahlt. Die Lichtquellen 16, 18, 20, 22, welche den Oberflächenbereich 104 in den unterschiedlichen Beleuchtungszuständen anstrahlen, sind an unterschiedlichen Positionen angeordnet und weisen unterschiedliche Ausrichtungen auf.

### Bezugszeichenliste

- 10: Reifenprüfeinrichtung
- 12: Beleuchtungseinrichtung
- 14a, 14b: Lichtquellenträger
- 16: Lichtquellen
- 18: Lichtquellen
- 20: Lichtquellen
- 22: Lichtquellen
- 24: Lichtquellen
- 26: Bildaufnahmeeinrichtung

- 100: Reifen
- 102: Reifenoberfläche
- 104: Oberflächenbereich

- α, β: Lichteinfallswinkel
- γ, δ, ε: Anstellwinkel

## Patentansprüche

1. Verfahren zum Prüfen von Reifen (100), mit den Schritten:
- Beleuchten eines Oberflächenbereichs (104) eines zu prüfenden Reifens (100) mittels einer Beleuchtungseinrichtung (12), wobei die Beleuchtungseinrichtung (12) mehrere Lichtquellen (16,18, 20, 22, 24) aufweist, die den Oberflächenbereich (104) aus zwei Richtungen anstrahlen;
- Erzeugen von mehreren zweidimensionalen Bildaufnahmen des beleuchteten Oberflächenbereichs (104) mittels zumindest einer Bildaufnahmeeinrichtung (26); und
- Auswerten der mehreren zweidimensionalen Bildaufnahmen mittels einer Auswerteeinrichtung zur Erfassung von Defekten, Fehlern und/oder Beschädigungen an der Oberfläche (102) des Reifens (100);
wobei die mehreren zweidimensionalen Bildaufnahmen bei unterschiedlichen Beleuchtungszuständen erzeugt werden und das Auswerten der mehreren zweidimensionalen Bildaufnahmen das Ermitteln von dreidimensionalen Profilinformationen der Oberfläche (102) des Reifens (100) auf Grundlage der mehreren bei unterschiedlichen Beleuchtungszuständen erzeugten zweidimensionalen Bildaufnahmen umfasst, wobei beim Auswerten der mehreren zweidimensionalen Bildaufnahmen eine photometrische Stereoanalyse auf Grundlage der mehreren bei unterschiedlichen Beleuchtungszuständen erzeugten zweidimensionalen Bildaufnahmen durch die Auswerteeinrichtung durchgeführt wird,
**dadurch gekennzeichnet, dass**
die Lichteinfallswinkel (α und β), die sich jeweils aufgrund der Anstrahlung des Oberflächenbereichs (104) aus zwei Richtungen ergeben, in einem Bereich zwischen 35 und 45 Grad liegen.

2. Verfahren nach Anspruch 1,
**dadurch gekennzeichnet, dass** das Beleuchten eines Oberflächenbereichs (104) des zu prüfenden Reifens (100) und/oder das Erzeugen von mehreren zweidimensionalen Bildaufnahmen mehrfach während einer Rotationsbewegung des Reifens (100) erfolgt.

3. Verfahren nach Anspruch 2,
**dadurch gekennzeichnet, dass** die Beleuchtungseinrichtung (12) und die Bildaufnahmeeinrichtung (26) derart von einer Steuerungseinrichtung gesteuert werden, dass während einer Umdrehung des Reifens (100) zweidimensionale Bildaufnahmen bei zumindest drei unterschiedlichen Beleuchtungszuständen erzeugt werden, welche zusammen zumindest einen Oberflächenabschnitt des Reifens (100) über den gesamten Reifenumfang bei den zumindest drei unterschiedlichen Beleuchtungszuständen abbilden.

4. Verfahren nach einem der vorstehenden Ansprüche,
**dadurch gekennzeichnet, dass** das Ermitteln von dreidimensionalen Profilinformationen der Oberfläche (102) des Reifens (100) im Rahmen einer schattenbasierten Rekonstruktion der Oberfläche (102) des Reifens (100) auf Grundlage von mehreren bei unterschiedlichen Beleuchtungszuständen erzeugten zweidimensionalen Bildaufnahmen erfolgt.

5. Verfahren nach einem der vorstehenden Ansprüche,
**dadurch gekennzeichnet, dass** der beleuchtete Oberflächenbereich (104) in den unterschiedlichen Beleuchtungszuständen aus unterschiedlichen Richtungen von Lichtquellen (16, 18, 20, 22, 24) der Beleuchtungseinrichtung (12) angestrahlt wird.

6. Verfahren nach Anspruch 1,
**dadurch gekennzeichnet, dass** der beleuchtete Oberflächenbereich (104) in den unterschiedlichen Beleuchtungszuständen von unterschiedlichen Lichtquellen (16, 18, 20, 22, 24) der Beleuchtungseinrichtung (12) angestrahlt wird.

7. Reifenprüfeinrichtung (10), mit
- einer Beleuchtungseinrichtung (12), welche dazu eingerichtet ist, einen Oberflächenbereich (104) eines zu prüfenden Reifens (100) zu beleuchten und dabei unterschiedliche Beleuchtungszustände zu erzeugen;
- zumindest einer Bildaufnahmeeinrichtung (26), welche dazu eingerichtet ist, mehrere zweidimensionale Bildaufnahmen des beleuchteten Oberflächenbereichs (104) zu erzeugen;
- einer Auswerteeinrichtung, welche dazu eingerichtet ist, die mehreren zweidimensionalen Bildaufnahmen zur Erfassung von Defekten, Fehlern und/oder Beschädigungen an der Oberfläche (102) des Reifens (100) auszuwerten; und
- einer Steuerungseinrichtung zum Steuern der Beleuchtungseinrichtung (12) und der zumindest einen Bildaufnahmeeinrichtung (26),
**dadurch gekennzeichnet, dass** die Steuerungseinrichtung dazu eingerichtet ist, die Beleuchtungseinrichtung (12) und die zumindest eine Bildaufnahmeeinrichtung (26) derart zu steuern, dass die mehreren zweidimensionalen Bildaufnahmen bei unterschiedlichen Beleuchtungszuständen erzeugt werden, und die Auswerteeinrichtung dazu eingerichtet ist, auf Grundlage von mehreren bei unterschiedlichen Beleuchtungszuständen erzeugten zweidimensionalen Bildaufnahmen dreidimensionale Profilinformationen der Oberfläche (102) des Reifens (100) zu ermitteln, wobei die Reifenprüfeinrichtung (10) dazu eingerichtet ist, das Verfahren zum Prüfen eines Reifens (100) nach einem der Ansprüche 1 bis 6 auszuführen.

8. Reifenprüfeinrichtung (10) nach Anspruch 7,
**gekennzeichnet durch** eine Rotationseinrichtung, mittels welcher der Reifen (100) rotierbar ist, wobei die Steuerungseinrichtung dazu eingerichtet ist, ein Beleuchten des Oberflächenbereichs (104) des zu prüfenden Reifens (100) und ein Erzeugen von mehreren zweidimensionalen Bildaufnahmen bei unterschiedlichen Beleuchtungszuständen mehrfach während einer Rotationsbewegung des Reifens (100) zu veranlassen.

## Claims

1. Method for inspecting tyres (100), having the steps of:
- illuminating a surface region (104) of a tyre (100) to be inspected by means of an illumination device (12), wherein the illumination device (12) has a plurality of light sources (16, 18, 20, 22, 24), which illuminate the surface region (104) from two directions;
- generating a plurality of two-dimensional image recordings of the illuminated surface region (104) by means of at least one image recording device (26); and
- evaluating the plurality of two-dimensional image recordings by means of an evaluation device in order to detect defects, flaws and/or damage on the surface (102) of the tyre (100);
wherein the plurality of two-dimensional image recordings are generated in different illumination states, and the evaluation of the plurality of two-dimensional image recordings comprises determining three-dimensional tread information relating to the surface (102) of the tyre (100) on the basis of the plurality of two-dimensional image recordings generated in different illumination states, wherein, when evaluating the plurality of two-dimensional image recordings, a photometric stereo analysis is carried out by the evaluation device on the basis of the plurality of two-dimensional image recordings generated in different illumination states, **characterized in that**
the angles of incidence (α and β) which arise on account of the illumination of the surface region (104) from two directions are in a range between 35 and 45 degrees.

2. Method according to Claim 1,
**characterized in that** the illumination of a surface region (104) of the tyre (100) to be inspected and/or the generation of a plurality of two-dimensional image recordings is/are carried out repeatedly during a rotational movement of the tyre (100).

3. Method according to Claim 2,
**characterized in that** the illumination device (12) and the image recording device (26) are controlled by a control device in such a manner that, during a revolution of the tyre (100), two-dimensional image recordings are generated in at least three different illumination states and together represent at least one surface section of the tyre (100) over the entire tyre circumference in the at least three different illumination states.

4. Method according to one of the preceding claims,
**characterized in that** three-dimensional tread information relating to the surface (102) of the tyre (100) is determined within the scope of shadow-based reconstruction of the surface (102) of the tyre (100) on the basis of a plurality of two-dimensional image recordings generated in different illumination states.

5. Method according to one of the preceding claims,
**characterized in that** the illuminated surface region (104) is illuminated in the different illumination states from different directions by light sources (16, 18, 20, 22, 24) of the illumination device (12).

6. Method according to Claim 1,
**characterized in that** the illuminated surface region (104) is illuminated in the different illumination states by different light sources (16, 18, 20, 22, 24) of the illumination device (12).

7. Tyre inspecting device (10) having
- an illumination device (12) which is configured to illuminate a surface region (104) of a tyre (100) to be inspected and to generate different illumination states in the process;
- at least one image recording device (26) which is configured to generate a plurality of two-dimensional image recordings of the illuminated surface region (104);
- an evaluation device which is configured to evaluate the plurality of two-dimensional image recordings in order to detect defects, flaws and/or damage on the surface (102) of the tyre (100); and
- a control device for controlling the illumination device (12) and the at least one image recording device (26),
**characterized in that** the control device is configured to control the illumination device (12) and the at least one image recording device (26) in such a manner that the plurality of two-dimensional image recordings are generated in different illumination states, and the evaluation device is configured to determine three-dimensional tread information relating to the surface (102) of the tyre (100) on the basis of a plurality of two-dimensional image recordings generated in different illumination states, wherein the tyre inspecting device (10) is configured to carry out the method for inspecting a tyre (100) according to one of Claims 1 to 6.

8. Tyre inspecting device (10) according to Claim 7,
**characterized by** a rotating device which can be used to rotate the tyre (100), wherein the control device is configured to cause illumination of the surface region (104) of the tyre (100) to be inspected and generation of a plurality of two-dimensional image recordings in different illumination states repeatedly during a rotational movement of the tyre (100).

## Revendications

1. Procédé d'inspection de pneumatiques (100), comprenant les étapes suivantes :
- éclairer une zone de surface (104) d'un pneumatique (100) à inspecter au moyen d'un dispositif d'éclairage (12), le dispositif d'éclairage (12) présentant plusieurs sources lumineuses (16, 18, 20, 22, 24) qui éclairent la zone de surface (104) à partir de deux directions ;
- générer une pluralité de captures d'images bidimensionnelles de la zone de surface éclairée (104) au moyen d'au moins un dispositif (26) de capture d'images ; et
- évaluer la pluralité de captures d'images bidimensionnelles au moyen d'un dispositif d'évaluation pour détecter des défauts, des erreurs et/ou des endommagements sur la surface (102) du pneumatique (100) ;
la pluralité de captures d'images bidimensionnelles étant générée sous différentes conditions d'éclairage, et l'évaluation de la pluralité de captures d'images bidimensionnelles comprenant le fait de déterminer des informations de profil tridimensionnel de la surface (102) du pneumatique (100) sur la base de la pluralité de captures d'images bidimensionnelles générée sous différentes conditions d'éclairage ; lors de l'évaluation de la pluralité de captures d'images bidimensionnelles, une stéréo-analyse photométrique est effectuée par le dispositif d'évaluation sur la base de la pluralité de captures d'images bidimensionnelles générée sous différentes conditions d'éclairage,
**caractérisé en ce que**
les angles (α et β) d'incidence de la lumière, qui résultent respectivement de l'éclairage de la zone de surface (104) à partir de deux directions, se situent dans une gamme allant de 35 et 45 degrés.

2. Procédé selon la revendication 1,
**caractérisé en ce que** l'éclairage d'une zone de surface (104) du pneumatique (100) à inspecter et/ou la génération d'une pluralité de captures d'images bidimensionnelles a lieu plusieurs fois au cours d'un mouvement de rotation du pneumatique (100).

3. Procédé selon la revendication 2,
**caractérisé en ce que** le dispositif d'éclairage (12) et le dispositif (26) de capture d'images sont commandés par un dispositif de commande de telle sorte que, pendant une rotation du pneumatique (100), des enregistrements d'image bidimensionnelles sont générés sous au moins trois conditions d'éclairage différentes, qui représentent ensemble au moins une section de surface du pneumatique (100) sur toute la circonférence du pneumatique sous lesdites au moins trois conditions d'éclairage différentes.

4. Procédé selon l'une des revendications précédentes,
**caractérisé en ce que** la détermination d'informations de profil tridimensionnel de la surface (102) du pneumatique (100) s'effectue dans le cadre d'une reconstruction basée sur les ombres de la surface (102) du pneumatique (100) sur la base d'une pluralité de captures d'images bidimensionnelles générée sous différentes conditions d'éclairage.

5. Procédé selon l'une des revendications précédentes,
**caractérisé en ce que** la zone de surface éclairée (104) est éclairée sous les différentes conditions d'éclairage à partir de différentes directions par des sources lumineuses (16, 18, 20, 22, 24) du dispositif d'éclairage (12).

6. Procédé selon la revendication 1,
**caractérisé en ce que** la zone de surface éclairée (104) est éclairée sous les différentes conditions d'éclairage par différentes sources lumineuses (16, 18, 20, 22, 24) du dispositif d'éclairage (12).

7. Dispositif (10) d'inspection de pneumatiques, comprenant
- un dispositif d'éclairage (12) qui est conçu pour éclairer une zone de surface (104) d'un pneumatique (100) à inspecter et pour générer ainsi différentes conditions d'éclairage ;
- au moins un dispositif (26) de capture d'images, qui est conçu pour générer une pluralité de captures d'images bidimensionnelles de la zone de surface (104) éclairée ;
- un dispositif d'évaluation, qui est conçu pour évaluer la pluralité de captures d'images bidimensionnelles afin de détecter des défauts, des erreurs et/ou des endommagements sur la surface (102) du pneumatique (100) ; et
- un dispositif de commande pour commander le dispositif d'éclairage (12) et ledit au moins un dispositif (26) capture d'images,
**caractérisé en ce que** le dispositif de commande est conçu pour commander le dispositif d'éclairage (12) et ledit au moins un dispositif (26) de capture d'images de telle sorte que la pluralité de captures d'images bidimensionnelles soit générée sous différentes conditions d'éclairage, et le dispositif d'évaluation est conçu pour déterminer des informations de profil tridimensionnel de la surface (102) du pneumatique (100) sur la base de la pluralité d'enregistrements d'image bidimensionnelles générée sous différentes conditions d'éclairage, le dispositif (10) d'inspection de pneumatiques étant conçu pour mettre en œuvre le procédé d'inspection d'un pneumatique (100) selon l'une des revendications 1 à 6.

8. Dispositif (10) d'inspection de pneumatiques selon la revendication 7, **caractérisé par** un dispositif de rotation au moyen duquel le pneumatique (100) est apte à être mis en rotation, le dispositif de commande étant conçu pour éclairer la zone de surface (104) du pneumatique (100) à inspecter et pour générer une pluralité de captures d'images bidimensionnelles, plusieurs fois, sous différentes conditions d'éclairage pendant un mouvement de rotation du pneumatique (100).
